Europäisches Patentamt

(19) European Patent Office

Office européen des brevets

(11) Publication number: **0 048 232**
**B1**

(12) **EUROPEAN PATENT SPECIFICATION**

(45) Date of publication of patent specification: **19.11.87**

(21) Application number: **81850155.3**

(22) Date of filing: **11.09.81**

(51) Int. Cl.⁴: **F 24 F 3/153**

(54) Apparatus for the treatment of a gas, in particular air.

(30) Priority: **12.09.80 SE 8006388**

(43) Date of publication of application:
**24.03.82 Bulletin 82/12**

(45) Publication of the grant of the patent:
**19.11.87 Bulletin 87/47**

(84) Designated Contracting States:
**FR GB IT**

(56) References cited:
**US-A-1 837 798**
**US-A-1 965 078**
**US-A-2 162 809**
**US-A-4 231 765**

(73) Proprietor: **Weitman, Jacob**
**Tryffelstigen 8**
**S-611 63 Nyköping (SE)**

(72) Inventor: **Weitman, Jacob**
**Tryffelstigen 8**
**S-611 63 Nyköping (SE)**

(74) Representative: **Wärulf, Olov**
**Oxelösunds Patentbyra HB Sköldvagen 36**
**S-613 00 Oxelösund (SE)**

Courier Press, Leamington Spa, England.

EP 0 048 232 B1

## Description

The present invention relates to an apparatus for treating a contaminated gas, possibly at an elevated temperature, such as exhaust air from space heating and/or industrial processes, said gas being purified by scrubbing and being given a predetermined temperature and a predetermined relative humidity, comprising an aggregate with contact surfaces and injection means for the injection of a scrubbing liquid, preferably comprising water, into the gas and/or against the contact surfaces, said contact surfaces are arranged to act simultaneously as, scrubber, heat exchanger and evaporator surfaces and being in heat transferring connection with a channel system for heat carrying fluid to transfer heat to or from the gas, and a separate heat exchanger to increase the temperature of the gas to said preset final value and in consequence thereof to decrease the relative humidity of the gas to said preselected final value.

In many industries a demand for processing air as well as inlet air to industrial buildings having accurately selected temperature and relative humidity is present, the demands of purity of the air, at least as far as it is to be used as inlet air to localities, being exacting. As typical examples of such industries where high relative humidity in the localities is a must may be mentioned textile industry, weaving industry, and paper industry, this due to the fact that in such industries a dry air is accompanied by severe problems as to static electricity. In said industries large flows of air of elevated temperature are produced, which may be more or less contaminated, wherefore it will seem desirable at least during winter to utilize the heat content of such air by purifying and reconditioning it with respect to temperature and relative humidity before recirculating it to localities or processes.

It has hitherto been common practice to scantily purify the heated and contaminated air, that is, purify the air so far as to avoid environment problems, the air then being expelled into the surrounding atmosphere. To satisfy the demand for inlet air to localities it has been common practice to suck large quantities of fresh air from the surrounding atmosphere. At least during winter-time large energy contribution has been necessary due to the net temperature increase of the air and to the heat consumed for vaporization of necessary quantities of water to increase the very low moisture content of the air during winter.

In US—A—1 837 798 a method of treating a contaminated gas is described. However, an apparatus carrying out the known method heats the gas leaving the washing unit, but this heating is not related to the relative humidity in a controlled way. US—A—1 837 798 describes an ordinary air conditioner, the object of which is to provide a room with cold air at low relative humidity. Accordingly, the object is to dehumidify air and maintain it at a controlled temperature.

It is an object of the present invention to substantially eliminate such problems by simultaneously providing for a purification of, as the case may be a heat recovery from and a recirculation of heated outlet air in such a manner that the outlet air alone or admixed with a quantity of fresh air, treated in the same manner, attains a desired quality as regards purity, temperature and relative humidity.

Said object is attained according to the invention by an apparatus which is characterized that the contact surfaces are inert and in that a sensor is arranged in the gas stream downstream of the contact surfaces but upstream of the separate heat exchanger to control the flow of said heat-carrying fluid in said channel system for controlling the temperature of said gas in its state substantially saturated with moisture.

The invention provides for a possibility to save large energy quantities by cleaning, climatization and recirculation of outlet air from different kinds of processes. Saving of energy can be provided by means of a direct heat recovery from the warm outlet air and due to the fact that the process air, at least in part, is recirculated. Saving of energy is obtainable by using the heat content of the process air as a substitute for the heat bound by the vaporization of such quantities of water which are necessary for increasing the relative humidity of the air to a desired value is as well to be emphasized.

According to the invention the process air, possibly admixed with fresh air outside, is conducted through a flow duct enclosing a number of contact or deposition surfaces, onto which are deposited and collected such contaminations as have been carried by the gas or have been dissolved therein or admixed therewith. The gas is conducted in such a manner that the contact between the gas and said contact surfaces will be intimate, and, further, in such a manner that the gas repeatedly is forced to change flow direction, so that particles, droplets of liquid or similar items carried by the gas, due to their relatively high density, hit the surfaces instead of being carried on. According to the invention the purification of the gas is provided for by means of a wet-scrubbing, the liquid, in most applications water, is ejected into the gas, preferably in counter-current thereto, and, as the case may be, onto portions of said contact surfaces. To enhance the efficiency of the scrubbing, the scrubbing liquid may contain substances without properties detrimental for the environment, tensides, e.g. which provide for an emulgation of air contaminations in the scrubbing liquid. To provide for the purification of the gas for substantial periods of time, a substantially continuous cleaning of the contact surfaces is an object of the invention, said cleaning being effected by using liquid injected into the gas and onto the contact surfaces to continuously flushing away the contaminations as they are being separated out from the gas. Advantageously, a surplus of scrubbing liquid may be used for this purpose. After having been used for the wet scrubbing proper and for the removal of separated contamination said liquid is collected, a concentrate of contaminations together with a portion of the scrubbing liquid being separated and the separated quantity of liquid replaced by a corresponding quantity of pure liquid. This surplus of scrubbing liquid has a function described more closely below.

The invention aims not only at such a purification of a gas flow that it can be recirculated and used for heating localities, but as well at an adaptation of the temperature and relative moisture of the gas to values required for the industry plant. It is made possible by injecting a surplus of water and by exactly controlling the temperature of the outlet gas flow, by transferring heat to or from the gas via said contact surfaces to create a gas flow saturated with humidity and accurately heated to a predetermined temperature level. By adding heat, such gas flow may then by simple means be brought to predetermined values of relative moisture and temperature. Such heating of the gas flow is provided for in a heat exchanger stage.

When moistening the air into a saturated state very large quantities of vaporized water are necessary, during winter-time in particular, if fresh air is sucked in from the surrounding atmosphere. Said large quantities of water bind large quantities of energy, such energy being, according to the invention, in the first instance taken from the contaminated gas which, together with a flow of cold and dry air from outside, is being treated according to the invention.

To improve the heat transfer to or from the gas at the contact surfaces as far as possible, a heat transferring fluid is conducted along one side of said surfaces, while the treated gas or air is conducted along the other side thereof. Preferably, the flow directions are selected according to the counter-current principle, as the case may be as well combined with the crosswise flow principle, which makes possible maximal temperature changes relative to the heat transferring surface. The heat transport between the gas and the heat carrying fluid through the contact surface is further enhanced by moistening said surface so as to expose a film-like coating of scrubbing liquid. Further, the heat transfer between the gas and the contact surface may be enhanced by choosing high flow velocity and turbulence of the gas, this further being of advantage with respect to the efficiency in the separation of gas contaminations.

A comparatively large surface and in addition thereto a surface which may be considered as inert relative to the treated gases and scrubbing liquid is necessary to obtain a desired efficiency of the scrubbing. When the contact surface is made from a material having excellent heat conduction property, copper for instance, the contact surface will be overdimensioned as regards the heat transfer capacity if the contact surface has a sufficient size to be efficient as regards the purification function. From economic points of view it would hardly be possible to use contact surface of an expensive metal material with sufficient size to obtain the intended purification. Therefore, a sufficiently large and inert contact surface is obtained by manufacturing it from a plastic material, as will be explained more closely below.

The invention will be more closely described with a reference to the accompanying drawings, in which

Fig. 1 schematically illustrates an apparatus according to the invention,

Fig. 2 is a simplified cross-section of an embodiment of the first step of an apparatus laid out as illustrated by Fig. 1, and

Fig. 3 illustrates an embodiment of an apparatus according to the invention.

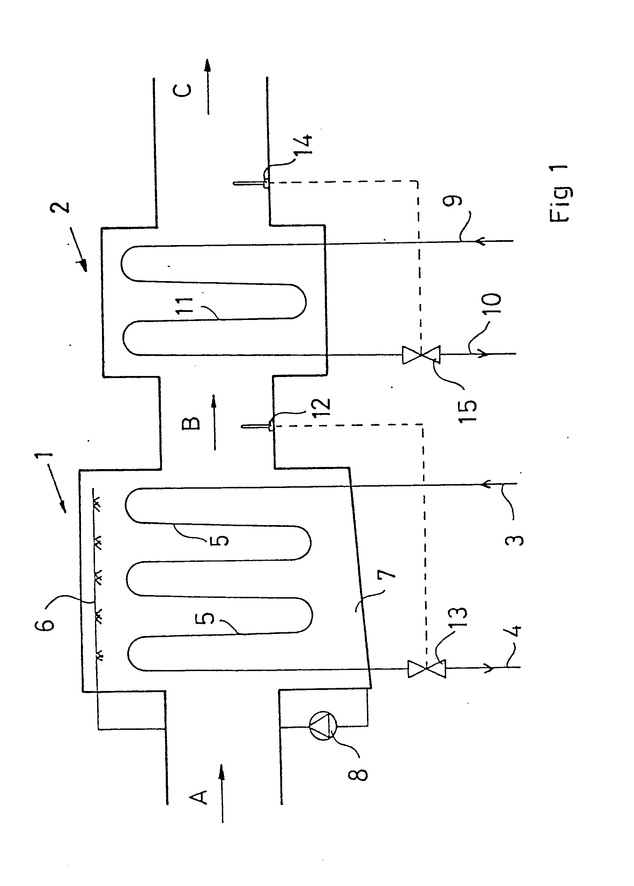

Figs. 1—3 illustrate an apparatus according to the invention. Fig. 1 shows that the apparatus comprises a first step 1 and a second step 2. The first step constitutes a device acting as a combined heat exchanger and scrubber, a purified air flow saturated by humidity and having a predetermined temperature leaving said step 1. Step 1 has an air inlet, arrow A, and an air outlet, arrow B, an inlet 3 for the supply of heat transporting fluid and an outlet 4 for said fluid, said inlet and outlet being connected to contact surfaces 5 constituting a tube system through which the heat transporting fluid flows from the inlet 3 to the outlet 4, that is, in counter-current to the air flow from the air inlet to the air outlet of step 1, it being of advantage to arrange the tube system such that the flow is as well in accordance with the crosswise current principle. Further, step 1 comprises injection means 6 for injecting a finely distributed liquid, said liquid in a majority of applications being water. The injection means 6 is arranged so as to inject the liquid into the air flow proper, preferably against the direction thereof, as well as onto the surfaces 5 to apply thereto a film-like coating of liquid. Step 1 further comprises a tray 7 for collecting injected surplus liquid. The liquid collected in the tray 7 is being fed back to the injection means 6 by a pump 8, substantially the same volume being recirculated. Part of the quantity of liquid is removed and a corresponding quantity of pure liquid added.

The contact surfaces 5 of step 1 serve two different aims. First, the surfaces 5 constitute heat exchange surfaces to transfer heat to or from air entering at arrow A. This heat is transferred through surfaces 5 between the air and a heat carrying fluid flowing from inlet 3 to outlet 4. Secondly, the surfaces 5 constitute contact surfaces between injected liquid and the air flow, thus enhancing the vaporization of the water while binding the contaminations entering with the air. Preferably, the surfaces 5 are arranged in such a manner relative to each other that they give rise to iterated changes of direction in the flowing air.

Due to the fact that the invention is mainly, although not exclusively, related to the treatment of such contaminated air of elevated temperature which, at least together with water, may be corrosive and which shall be purified from comtaminations to such a degree that it can be re-used as inlet air of localities, certain conditions will have to be satisfied by the design of this step 1 of the apparatus. The requirement of purification (scrubbing) implies that there are large contact surfaces between air and injected liquid. This is as well in agreement with the conditions for a favourable efficiency of the heat exchange and satisfactory vaporization of water. However, corrosion resistive materials are so expensive, that a necessary surface is hardly attainable by a convention choice of material. Therefore, according to the invention, the corrosion resistivity has been attended to by manufacturing the heat exchanger and contact surfaces 5 from an artificial resin material. Such material may seem remarkable in this connection, most plastic materials having a poor heat conductivity and would thus impair the heat exchange efficiency. However, plastic materials are comparatively cheap materials having satisfactory corrosion resistance, implying that the surfaces at low costs can be made so large that, in spite of the poor heat conducting capacity, the efficiency of the heat exchange function is maintained at a sufficiently high level. Favourable for attaining a high efficiency is as well the fact that the surfaces operate in a wetted state.

Exit B of step 1 constitutes an inlet to the second step of the apparatus, constituting a heat exchanger 2 which has an outlet at arrow C and an inlet 9 for a heat transporting fluid to heat exchanging surfaces 11, the fluid leaving the heat exchanging surfaces 11 through an outlet 10. The heat exchanging surfaces 11 are arranged according to the counter current principle.

The apparatus may further comprise a droplet separator, not shown in Fig. 1, which may either be arranged within the combined scrubber and heat exchanger 1 or as a separate unit between steps 1 and 2 in the connection therebetween at arrow B.

The apparatus is operated in the following way. In the first step 1 of the apparatus water is injected via the injection means 6 in such a quantity and in finely distributed state that the relative humidity of the air increases to a value substantially reaching 100% at arrow B. Due to the vaporization of water a certain quantity of energy will then be absorbed. This implies that at arrow B the air is saturated by humidity and has a lower temperature than would be the case at arrow A but the absorbed energy is partly substituted via the contact surfaces 5. If no further water is present in form of minute water droplets, the quantity of water contained in a specific volume of air is determined by the temperature of the air. To change the values as to relative humidity and temperature from values prevailing at arrow B to intended final values at arrow C, the temperature is increased to a desired level by heat supply in the heat exchanger 2. The maximal quantity of water contained in a specific volume of air in the form of vapour being depending on the temperature and increasing with the temperature, the relative humidity of the air will decrease to a value at arrow C less than 100% when increasing the temperature. The magnitude of the decrease of the relative humidity will be dependent on the absolute humidity content of the air, this in turn being dependent of the temperature prevailing at arrow B. This will mean that, after the temperature at arrow C is determined, the relative humidity at this point C may easily be controlled by controlling the air temperature at arrow B. To provide for such control of the temperature at arrow B, a temperature sensor 12 is arranged at this place, said temperature sensor 12 controlling a control valve 13, which is, preferably, arranged in the fluid outlet 4 of step 1. Obviously, a certain control of the temperature may be provided for by controlling the temperature of the entering air flow, that is, a variation of admixing cold air from outside, for instance, with the warm process or locality air. Finally, the air temperature at arrow C is controlled in a similar manner by sensing the temperature by means of a sensor 14 arranged in the outlet, arrow C, of the apparatus to control a control valve 15 in the heat transporting fluid duct of step 2.

In such operating situations when the air at arrow A has a comparatively high temperature, the temperature control at arrow B provides for a heat transport from the surfaces 5 by means of the heat transporting fluid entering at 3 and leaving at 4, that is, the heat transporting fluid is heated in case the cooling due to vaporization of water is not sufficient for decreasing the air temperature. In other conditions of operation, in which air entering at arrow A has a lower temperature or is dryer (operation during winter-time) heat is instead to be added, controlled by temperature.

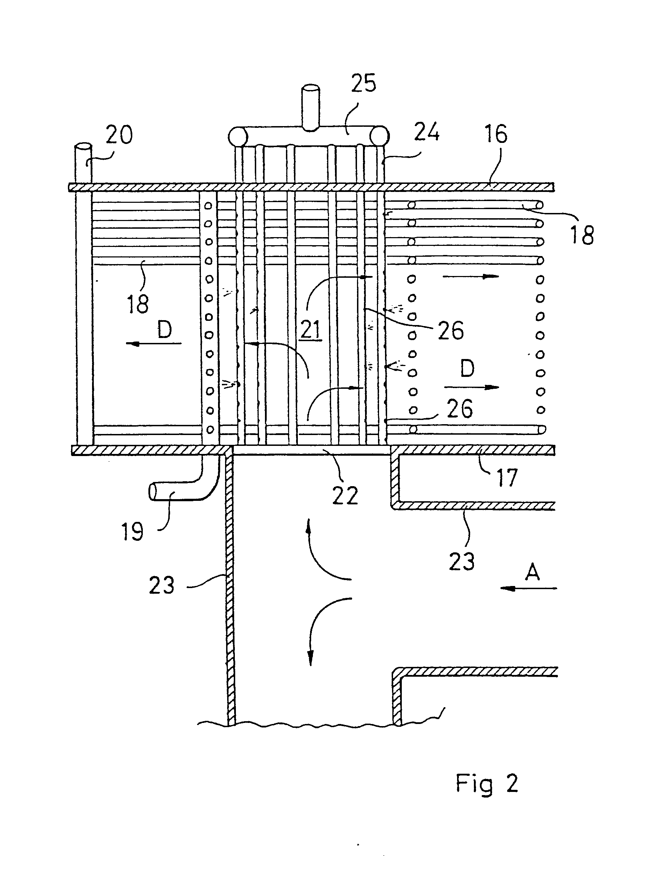

Fig. 2 shows a cross-section of an embodiment of the combined purification and climatization apparatus, step 1 in Fig. 1. This is built up about an upper and lower plate 16 and 17, respectively, which are secured relative to each other by means not shown in the drawing and, for instance, comprising vertical posts arranged along the peripheries of the plates 16 and 17. Between the plates a number of tube coils 18 are arranged, the inner ends of which are connected to an outlet 19 and the outer ends of which are connected to an inlet 20, thereby providing for a counter-current action as well as a crosswise-current action together with the flow of air to be purified and given selected climate parameters. For the sake of simplicity only part of the tube coils are shown. The coils 18 are arranged in such a manner that a vertical channel 21 is provided for centrally of the apparatus, said channel in practice having a diameter in order of 1 meter, for instance. Said channel 21 opens downwardly, the plate 17 having a corresponding aperture 22, connecting to an air supply duct 23 having an inlet A. From inlet A air flows through the aperture 22 into the channel 21 and further radially outwards in the direction of arrows D to the periphery of coils 18 where the air leaves the apparatus.

At the periphery of the central channel 21 a number of vertical tubes 24 are arranged said channels on top of the plate 16 being connected to an inlet header 25 for scrubbing fluid, usually water, under pressure. In an embodiment of the size referred to above, the vertical tubes 24 may be arranged at a mutual distance of about 10 cm in the peripheral direction, the tubes on their surfaces facing the coils being provided with a number of nozzles 26 to eject jets of finely dispersed water toward the coils 18 and into the spaces within which the air flows in the direction of arrows D. Water in such a quantity that the coils 18 are covered by film-like layers of water and, in addition thereto, the air is intimately admixed with finely dispersed water is ejected through the nozzles 26. The water thus ejected is then along the periphery of the device expelled together with the contaminations separated from the air and is thereafter collected to be purified and recirculated. A surplus of water may be used, to effectively wash the coils 18 and therewith keep the coils free from precipitating contaminations.

As an alternative to the vertical tubes 24 as described, the channel 21 may comprise a centrally arranged tube provided with a number of nozzles for ejecting finely dispersed water. Said nozzles are then preferably directed as well against the air flow from the air supply duct 23 as in the direction toward the coils 18. preferably, the nozzles are self-rinsing and of spiral type.

Instead of being shaped in the manner illustrated by Fig. 2 the coils 18 may be shaped in a plurality of alternative manners. So for instance, the coils instead of being arranged as flat spirals, may be conical- or screw-shaped, the different windings of the coils being arranged relative to each other in such a manner that the flow in the direction of arrows D will be wave-shaped or zigzag-shaped. Further, the nozzles 26 instead of being arranged in the manner described above, may be located along a screwline-shaped coil within the central channel 21. Further it may be emphasized that economic advantage in reaching a sufficiently large surface of the coils 18 is obtainable by producing them from a plastic material.

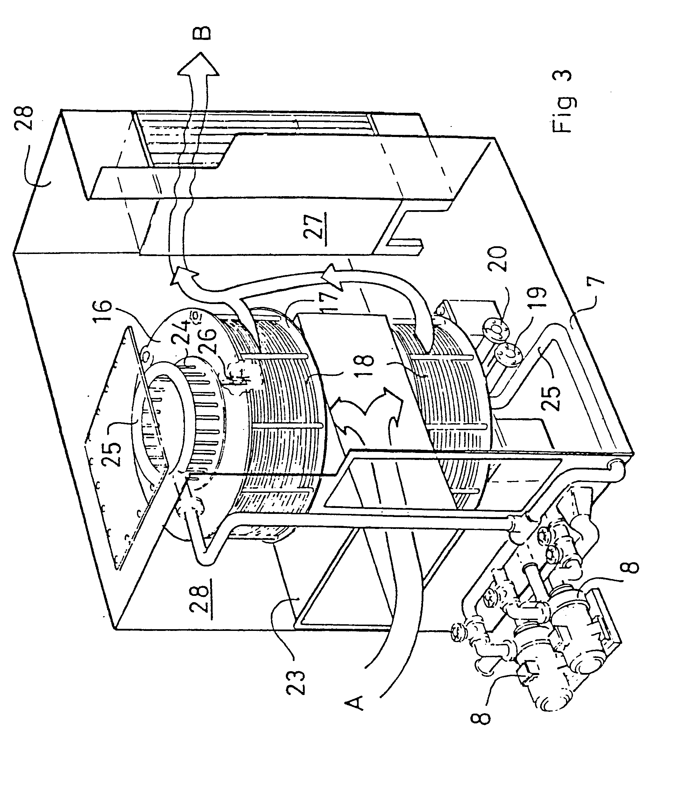

Fig. 3 shows an example of a construction of the combined contamination separator and climatization apparatus, step 1 in Fig. 1, as applied in practice. Above and below an air admission channel 23 an upper and a lower group of the tube coils 18 are arranged, the upper group corresponding to the device illustrated by Fig. 2. Fig. 3 shows that the upper as well as the lower group of tube coils 18 are arranged between upper and lower plates 16 and 17, respectively, and are in connection with an outlet 19 and an inlet 20. Water under pressure is introduced by pumps 8 and connected to the inlet tube 25 and therefrom via vertical tubes 24 to nozzles 26 within a central channel 21. The air introduced at A leaves along the peripheries of the coils 18 passing therefrom through a droplet separator 7 to the outlet B. Preferably the apparatus as well as the droplet separator are enclosed by a cover 28, the lower part of which acting as collecting tray 27 for surplus water, compare Fig. 1. As mentioned above with reference to Fig. 2, the greater part of the water ejected through the nozzles 26 leaves at the periphery of the coils, there containing precipitated contaminations washed off from the coils. However, part of the finely dispersed water, if injected in large surplus, will be carried on by the air flow, due to the fact that said flow has a relatively high flow velocity. In the embodiment according to Fig. 3 the two aggregates are enclosed in a cover representing a large flow cross-section for the air, the flow velocity thus being substantially diminished, allowing for a sedimentation of water particles carried by the air toward the bottom of the cover, constituting the collecting tray 7. Very small particles which are not yet precipitated when leaving the cover 28 will be separated out in the droplet separator 27, the air leaving the apparatus at B being substantially saturated with humidity, however free from water in liquid state.

**Claims**

1. An apparatus for treating a contaminated gas, possibly at an elevated temperature, such as exhaust air from space heating and/or industrial processes, said gas being purified by scrubbing and being given a predetermined temperature and a predetermined relative humidity, comprising an aggregate with contact surfaces (5, 18) and injection means (6, 26) for the injection of a scrubbing liquid, preferably comprising water, into the gas and/or against the contact surfaces, said contact surfaces are arranged to act simultaneously as, scrubber, heat exchanger and evaporator surfaces and being in heat transferring connection with a channel system for heat carrying fluid to transfer heat to or from the gas, and a separate heat exchanger (2) to increase the temperature of the gas to said preset final value and in consequence thereof to decrease the relative humidity of the gas to said preselected final value, characterized in that the contact surfaces are inert and in that a sensor (12) is arranged in the gas stream downstream of the contact surfaces but upstream of the separate heat exchanger to control the flow of said heat-carrying fluid in said channel system for controlling the temperature of said gas in its state substantially saturated with moisture.

2. The apparatus according to claim 1, characterized in that said contact surfaces (18) consist of tube coils manufactured from artificial resin material, said tube coils constituting said channel system.

3. The apparatus according to claim 1 or 2, characterized in that it comprises collecting means (7) for collecting a surplus of injected scrubbing liquid and contaminations separated out of the gas, said collecting means (7) being connected to separating means for removing contaminations together with a part of the scrubbing liquid, the collecting means further being in connection with a source of scrubbing liquid and with pump means (8) for supplying scrubbing liquid to said injection means (6, 26).

## Patentansprüche

1. Vorrichtung zur Behandlung eines verunreinigten Gases, gegebenenfalls bei hoher Temperatur, beispielsweise von Abluft oder Abgasen von einer Raumheizung und/oder industriellen Verfahren wobei das Gas durch Waschen gereinigt wird und eine vorgegebene Temperatur sowie eine vorgegebene relative Luftfeuchte erhält, mit einem Aggregat mit Kontaktflächen (5, 18) und einer Einspritzeinrichtung (6, 26) zum Einspritzen einer Waschflüssigkeit, die vorzugsweise Wasser aufweist, in das Gas und/oder gegen die Kontaktflächen, wobei die Kontaktflächen so angeordnet sind, daß sie zugleich als Wäscher, Wärmetauscher und Verdampferflächen wirken und in wärmeübertragender Verbindung mit einem Kanalsystem für ein wärmeübertragendes Fluid stehen, um auf das Gas oder von dem Gas Wärme zu übertragen, und mit einem separaten Wärmetauscher (2), um die Temperatur des Gases auf den vorgegebenen Endwert zu erhöhen und infolgedessen die relative Luftfeuchtigkeit des Gases auf den vorgewählten Endwert zu verringern, dadurch gekennzeichnet, daß die Kontaktflächen inert sind und daß ein Meßfühler (12) in dem Gasstrom stromabwärts von den Kontaktflächen, aber stromaufwärts vom separaten Wärmetauscher angeordnet ist, um die Strömung des wärmeüber tragenden Fluids in dem Kanalsystem zu steuern, um die Temperatur des Gases in seinem Zustand zu kontrollieren, in welchem es im wesentlichen mit Feuchtigkeit gesättigt ist.

2. Vorrichtung nach Anspruch 1, dadurch gekennzeichnet, daß die Kontaktflächen (18) aus Rohrwindungen bestehen, die aus einem Kunstharzmaterial hergestellt sind, wobei die Rohrwindungen das Kanalsystem bilden.

3. Vorrichtung nach Anspruch 1 oder 2, dadurch gekennzeichnet, daß sie eine Sammeleinrichtung (7) aufweist, um einen Überschuß von eingespritzter Waschflüssigkeit und von aus dem Gas abgeschiedenen Verunreinigungen aufzufangen, wobei die Sammeleinrichtung (7) mit einer Abscheideeinrichtung verbunden ist, um Verunreinigungen zusammen mit einem Teil der Waschflüssigkeit zu entfernen, wobei die Sammeleinrichtung außerdem mit einer Quelle für Waschflüssigkeit und mit einer Pumpeinrichtung (8) verbunden ist, um der Einspritzeinrichtung (6, 26) Waschflüssigkeit zuzuführen.

## Revendications

1. Un appareil pour traiter un gaz contaminé, éventuellement à température élevée, par exemple l'air d'evacuation provenant de procédés industriels et/ou de chauffage d'espace, ledit gaz étant purifié par lavage et étant donné à une température prédéterminée et à une humidité relative prédéterminée, comportant un ensemble avec des surfaces de contact (5, 18) et des moyens d'injection (6, 26) pour l'injection d'un liquide de lavage, comprenant de préférence de l'eau, dans le gaz et/ou contre les surfaces de contact, lesdites surfaces de contact sont agencées pour fonctionner simultanément comme surface de lavage, d'échange thermique et d'évaporation en étant en relation de transfert thermique avec un système de canaux pour le fluide caloporteur de façon à transférer la chaleur au ou du gaz, et un échangeur thermique séparé (2) pour augmenter la température du gaz jusqu'à ladite valeur finale prédéterminée et en conséquence de quoi diminuer l'humidité relative du gaz à cette valeur finale présélectionnée, caractérisé en ce que les surfaces de contact sont inertes et qu'un capteur (2) est disposé dans le courant gazeux en aval des surfaces de contact mais en amont de l'échangeur de chaleur séparé pour contrôler le débit dudit fluide caloporteur dans ledit système de canaux afin de contrôler la température dudit gaz dans son état pratiquement saturé d'humidité.

2. L'appareil selon la revendication 1, caractérisé en ce que les surfaces de contact (18) sont constituées de serpentins tubulaires fabriqués en un matériau à base de résine artificielle, ces serpentins tubulaires constituant ledit système de canal.

3. L'appareil selon la revendication 1 ou 2, caractérisé en ce qu'il comporte des moyens collecteurs (7) pour récupérer un surplus de liquide de lavage injecté et les contaminats séparés du gaz, lesdits moyens collecteurs (7) étant reliés à des moyens séparateurs pour éliminer les contaminats conjointement avec une partie du liquide de lavage, les moyens collecteurs étant en outre reliés à une source de liquide de lavage et à des moyens de pompage (8) pour fournir du liquide de lavage auxdits moyens d'injection (6, 26).

Fig 1

Fig 2

Fig 3